(19) Europäisches Patentamt

European Patent Office

Office européen des brevets

(11) Veröffentlichungsnummer: **0 190 621**

**A1**

(12) **EUROPÄISCHE PATENTANMELDUNG**

(21) Anmeldenummer: 86100920.7

(22) Anmeldetag: 23.01.86

(51) Int. Cl.⁴: **H01G 1/02**

(30) Priorität: 30.01.85 DE 3503130

(43) Veröffentlichungstag der Anmeldung:
13.08.86 Patentblatt 86/33

(84) Benannte Vertragsstaaten:
DE FR GB IT

(71) Anmelder: **Siemens Aktiengesellschaft Berlin und München**
**Wittelsbacherplatz 2**
**D-8000 München 2(DE)**

(72) Erfinder: **Krös, Rudolf, Dipl.-Ing.(FH)**
**Walkürenweg 24**
**D-7920 Heidenheim(DE)**
Erfinder: **Vetter, Harald, Dipl.-Ing.(FH)**
**Weinberg 7**
**D-8400 Regensburg(DE)**

(54) Elektrischer Kondensator.

(57) Ein elektrischer Kondensator (1) ist in ein Metallgehäuse (2) eingebaut. Der oder die Kondensatorwickel (1) sind von einer Wickelhüllwand (7) umgeben, die einen Abstand d vom Gehäuse (3) aufweist. Der Kondensator ist mit einem Imprägniermittel (5) gefüllt. Oberhalb des Flüssigkeitsspiegels (6) befindet sich ein Gas-Puffervolumen (4). Die Größe des Abstandes d = $r_3 - r_2$ bestimmt die Spannungverteilung $U_{B/G}$ und die Feldstärke $E_{B/G}$.

FIG 1

Elektrischer Kondensator

Die Erfindung betrifft einen elektrischen Kondensator, insbesondere Leistungskondensator, der in ein Gehäuse eingebaut ist und bei dem zwischen Gehäusewand und Kondensator ein Abstand d vorgesehen ist.

Bei derartigen Kondensatoren besteht der aktive Teil häufig aus runden Kondensatorwickeln, die beispielsweise passend zueinander verschaltet und über Kunststoffteile z.B. Kappen distanziert werden. Diese Kappen sind meist mit geringem Spiel in das zugehörige Metallgehäuse (Rohr, Becher oder dergleichen) eingesetzt und fixieren gleichzeitig die Kondensatorwickel, da diese in vielen Fällen wieder relativ spielfrei in den Kunststoffkappen angeordnet sind.

Leistungskondensatoren werden häufig mit Imprägniermitteln gefüllt. Bei Temperaturwechseln des Kondensators erfährt das Imprägniermittel eine Volumenänderung. Um das Metallgehäuse vor Überlastung durch die inkompressible Imprägnierflüssigkeit zu schützen, wird ein vorgegebenes "Reserve-Gasvolumen" (Puffervolumen) in das Kondensatorgehäuse eingeplant. Das so entstandene Gaspolster verhindert dann eine unzulässige Deformation des Kondensatorgehäuses.

Bei rechteckig konstruierten Kondensatorgehäusen ist zwar in der Regel kein derartiges "Reserve-Gasvolumen" erforderlich, da hier bei Volumenänderungen des Imprägniermittels die Formänderung der Gehäuse--Seitenwände ausreichend ist, um diese Änderungen - schadlos aufzunehmen. Es können aber auch hier selbstheilende Durchschläge oder Effekte im Zusammenhang mit Sprühen Gas produzieren. Die quantitative Zuordnung dieser Vorgänge ist zwar schwierig und unter anderem vom Gasaufnahmevermögen der konkret eingesetzten Imprägniermittel abhängig, jedoch bilden sich auch bei rechteckigen Gehäusen und bei längerer Betriebszeit zumindest Gasblasen geringen Umfanges innerhalb des Kondensatorgehäuses, bevorzugt in der Randzone Wickel/Gehäuse.

Wird nun ein Kondensator, insbesondere in runder Bauart, mit einer Belag/Gehäuse-Betriebsspannung ($U_{B/G}$) belastet, die einen von der wirksamen Feldstärke ($E_{B/G}$) abhängigen Teilentladungsintensitätsschwellwert überschreitet, kann das Einbaumaterial und/oder das Gehäuse gegebenenfalls bis zum Totalausfall geschädigt werden.

Bei diesen Vorgängen ist zu beachten, daß die Belag/Gehäuse Teilentladungs-Intensität im Gas bei gleicher Feldstärke naturgemäß höher als z.B. im Imprägnieröl ist. Wird nun ein Kondensator z.B. statt in "stehender" in "liegender" Einbaulage betrieben, befindet sich das "Reserve-Gasvolumen" bzw. die Gasblase längs der oberen Gehäuseinnenwand. Im Gegensatz sur stehenden Betriebsweise, bei der sich das Gasvolumen im relativ "ungefährlichen" Bereich oberhalb der Kondensatorwickel befindet, ist somit bei der "liegenden Einbauweise" das Gasvolumen im relativ engen Spalt zwischen Kondensatorwickel und Gehäuse angeordnet. Daraus resultiert eine grundsätzlich höhere Belag/Gehäuse Teilentladungs--Intensität im Bereich des Gasvolumens.

Ist nun der Abstand zwischen Kondensatorwickel und Gehäuse zu gering, tritt die oben erwähnte Schädigung durch Teilentladungen ein.

Andererseits ist man bestrebt, den Abstand zwischen Kondensatorwickel und Gehäusewand auch nicht unnötig groß zu machen, da hiermit eine Volumenvergrößerung des Kondensatorgehäuses verbunden ist.

Aufgabe der Erfindung ist es daher, einen Kondensator der eingangs genannten Art anzugeben, bei dem der Abstand zwischen Wickel und Gehäuse optimiert ist.

Diese Aufgabe wird erfindungsgemäß dadurch gelöst, daß der Abstand $d_n$ bei n Wickelhüllwänden nach folgender Beziehung bemessen wird:

$$d_n = U_{B/G} / E_{B/G} \,,$$

mit

$U_{B/G}$ = Spannung Belag/Gehäuse in V

$E_{B/G}$ = Feldstärke Belag/Gehäuse in V/m, wobei

$$E_{B/G} = E_{n(max)} = U_{B/G} / (\Sigma_m \bullet r_n (1/\Sigma_m) \,.$$

$$1n (r_{n+1} / r_n) + 1/\Sigma_{m+1} \bullet 1n (r_{n+2} / r_{n+1}) + ..)$$

mit

$\Sigma_m$ = relative Dielektrizitätskonstante

r = Radius der Wickelhüllwand in m .

Durch den erfindungsgemäß bemessenen Abstand d zwischen den äußersten aktiven Windungen bzw. Schoopkanten der Kondensatorwickel oder der Hüllwand und der Gehäuseinnenwand wird die Belag/Gehäuse-Feldstärke bis auf einen zulässigen Wert reduziert. Der Abstand d hängt dabei von der Teilentladungsintensität in dem gasförmigen Medium ab und kann durch ein geeignetes Gas (z.B. $SF_6$) im Vergleich zu Luft reduziert werden. Bei dem genannten $SF_6$-Gas beträgt der Reduktionsfaktor beispielsweise ca. 50%, wodurch sich ein Kostenvorteil für das Gehäuse ergibt.

Die erfindungsgemäße Bemessungsregel eignet sich grundsätzlich nicht nur für imprägnierte Kondensatoren mit "Reserve Gasvolumina" sondern auch zur Bemessung von trockenen, nicht imprägnierten Kondensatoren.

Weitere Vorteile des Gegenstandes der Erfindung werden anhand der folgenden Ausführungsbeispiele erläutert.

In der dazugehörenden Zeichnung zeigen

Fig. 1 einen schematischen Querschnitt eines Kondensators mit Spannungs- und Feldstärke-Verteilung,

Fig. 2 einen Kondensator mit koaxialem Wickelstapel,

Fig. 3 die Teilentladungs-Einsatzspannung in Abhängigkeit vom Verhältnis der Schichtdicke $SF_6$ / Glasfaserumhüllung und

Fig. 4 die Durchschlagspannung in Abhängigkeit von der Schichtdicke von Luft, $SF_6$ and Imprägnieröl.

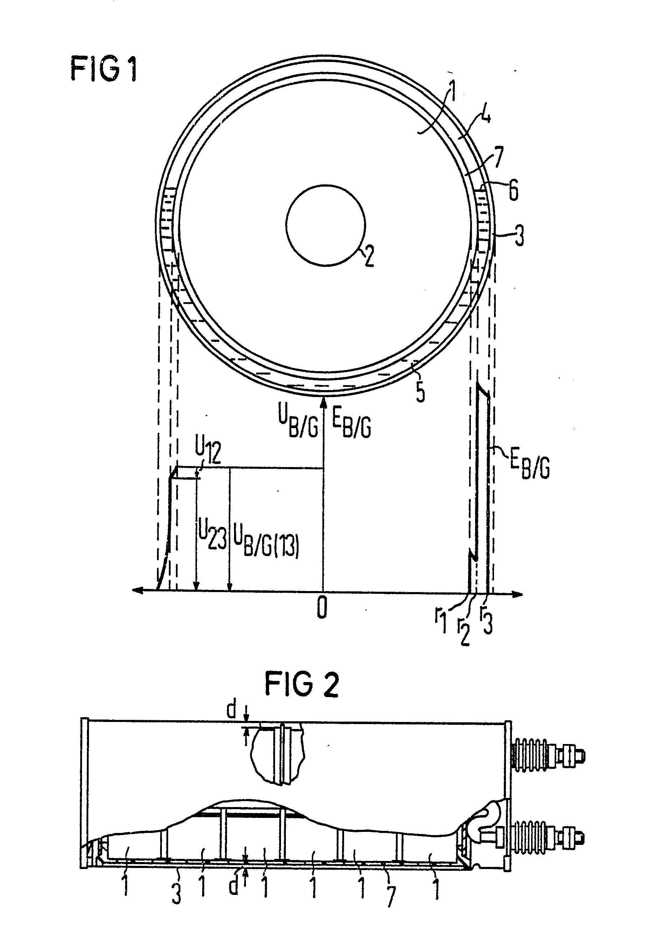

Fig. 1 zeigt schematisch einen Kondensatorwickel 1 auf einem Kernrohr 2, der in einem Metallgehäuse 3 angeordnet ist. Der Kondensator befindet sich in "liegender" Stellung, so daß längs der oberen Gehäusewand eine Gasblase 4, z.B. $SF_6$, angeordnet ist. Der untere Teil ist mit einem Imprägniermittel 5 bis zum Flüssigkeitsspiegel 6 gefüllt. Der Kondensatorwickel 1 ist von einer Wickelhüllwand 7 umgeben, die beispielsweise aus einem glasfaserverstärkten Kunstharzverbund gemäß DE-OS 32 39 865 besteht.

Der Außenradius des Wickels 1 beträgt $r_1$, der Außenradius der Wickelhüllwand 7 $r_2$ and der Innenradius des Gehäuses 3 $r_3$.

In der Fig. 1 ist ferner die wirksame Belag/Gehäuse-Spannung $U_{B/G}$ und die wirksame Belag/Gehäuse-Feldstärke $E_{B/G}$ im Gasspalt angegeben. Demnach tritt die maximale Feldstärke an der Übergangsfläche zwischen Wickelhüllwand 7 und Gasblase 4 auf.

In der Fig. 2 ist eine wirtschaftliche Realisierungsmöglichkeit durch einen koaxialen Stapel von Kondensatorwickeln 1 dargestellt. Die Wickelhüllwand 7 besteht aus einem Stück glasfaserverstärktem Kunstharzverbund, wodurch auch der notwendige Abstand in Längsrichtung zur Schoopschicht der Kondensatorwickel 1 (Feldverstärkung an den Kanten) gewährleistet wird.

Der Abstand d in radialer Richtung wird durch geeignete Wahl des Herstellungsdurchmessers der Wickelstapel-Hüllwand sichergestellt.

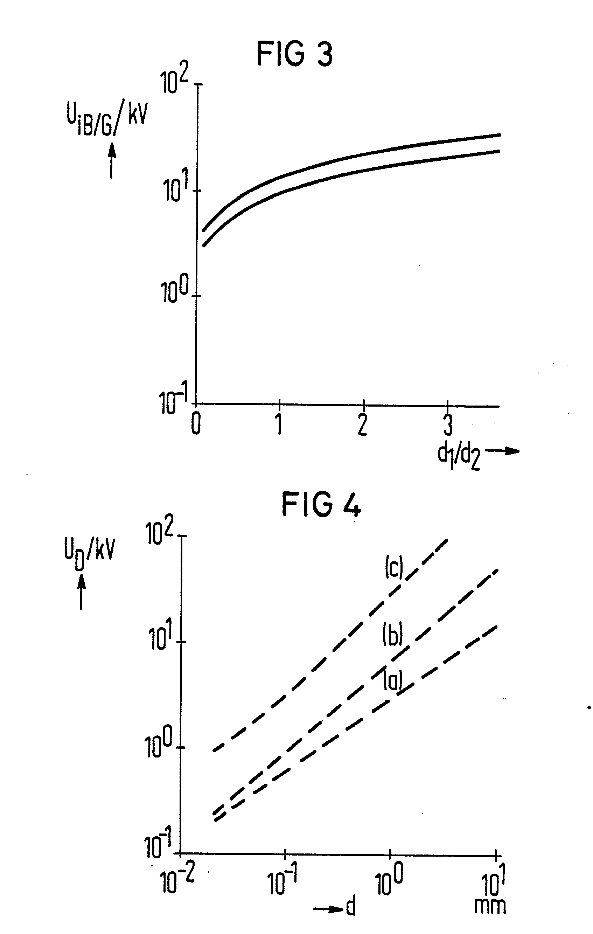

In der Fig. 3 ist die Belag/Gehäuse-Teilentladungs-Einsatzspannung $U_{(B/G)}$ in Abhängigkeit vom Verhältnis Schichtdicke $d_1$ $SF_6$ zur Glasfaserdicke $d_2$ dargestellt. Die Werte wurden dabei mit einer Epoxidharz-Glasfaserwickelhüllwand von 1,5 ± 0,3 mm und einem $SF_6$-Gasdruck von 101,3 kPa ermittelt. Die beiden Kurven stellen die oberen und unteren Grenzen der Fehlerkurven der einzelnen Meßwerte dar. Wie der Figur zu entnehmen ist, steigt die Teilentladungs-Einsatzspannung mit wachsender $SF_6$-Schichtdicke $d_1$ (bei konstanter Epoxidharz-Glasfaserwickelhüllwand) an.

In der Fig. 4 ist die Durchschlagsspannung Belag/Gehäuse $U_D$ von Luft (a)-, $SF_6$ (b)- und Ölschichten - (c) in Abhängigkeit der jeweiligen Schichtdicken d bei einem Druck von d = 101,3 kPa dargestellt. Die Durchschlagsspannung ist dabei näherungsweise proportional der Teilentladungs-Einsatzspannung und zeigt deshalb die Unterschiede zwischen den einzelnen Medien.

Den vorliegenden Ergebnissen ist zu entnehmen, daß bei richtg dimensionierten Abständen d ausreichende Feldschwächungseffekte realisiert werden können, die eine wirtschaftliche Lösung der Aufgabe ermöglichen.

Ausführungsbeispiel 1:

An Kondensatoren mit den oben angeführten Wickelhüllwänden wurden die Teilentladungs-Intensitäten mit einem Abstand d = 0,2 mm und $SF_6$-Füllung bei 101,3 kPa gemessen. Hierbei ergab sich eine Spannungsfestigkeit $U_{B/G\ max} \geq 6kV$.

Ausführungsbeispiel 2:

Bei gleichem Kondensatoraufbau wie im Ausführungsbeispiel 1 wurde der Abstand d auf 2,4 mm vergrößert. Diese Kondensatoren sind bis ca. 10 kV frei von Teilentladungen.

Neben der in den Ausführungsbeispielen angeführten Verfestigung der Kondensatorwickel mittels einer Epoxidharz-Glasfaserwickelhüllwand sind auch andere Verfahren zur Verfestigung des Stapels möglich, wie z.B. Innenzentrierung, Teilverguß, Wickelbandagen aus Schrumpfschläuchen und ggf. Kappen mit umlaufenden Distanzringen.

## Ansprüche

Elektrischer Kondensator, insbesondere Leistungskondensator, der in ein Gehäuse eingebaut ist und bei dem zwischen Gehäusewand und Kondensator ein Abstand d vorgesehen ist, **dadurch gekennzeichnet**, daß der Abstand $d_n$ bei n Wickelhüllwänden nach folgender Beziehung bemessen wird:

$$d_n = U_{B/G} / E_{B/G} ,$$

mit $U_{B/G}$ = Spannung Belag/Gehäuse in V

$E_{B/G}$ = Feldstärke Belag/Gehäuse in V/m, wobei $E_{B/G} = E_{n(max)} = U_{B/G}( \Sigma_m \bullet r_n (1 / \Sigma_m)$ .

$1n (r_{n+1} / r_n) + 1 / \Sigma_{m+1} \bullet 1n (r_{n+2} / r_{n+1}) + ..)$

mit

$\Sigma_m$ = relative Dielektrizitätskonstante

r = Radius der Wickelhüllwand in m.

FIG 1

FIG 2

## FIG 3

## FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 489 638 (PYE LTD.) | | H 01 G 1/02 |
| | ----- | | |

|  |
|---|
| RECHERCHIERTE SACHGEBIETE (Int. Cl.4) |
| H 01 G |

Der vorliegende Recherchenbericht wurde für alle Patentansprüche erstellt.

| Recherchenort | Abschlußdatum der Recherche | Prüfer |
|---|---|---|
| DEN HAAG | 07-05-1986 | SCHUERMANS N.F.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503 03 82